# EUROPÄISCHE PATENTSCHRIFT

(11) **EP 3 019 317 B1**
(45) Veröffentlichungstag und Bekanntmachung des Hinweises auf die Patenterteilung: **28.08.2019**
(21) Anmeldenummer: 14730810.0
(22) Anmeldetag: 05.06.2014
(51) Int. Cl.: B29C 65/08, B29C 65/10, B65B 3/02, B65D 8/00, B31B 105/00, B31B 110/35

(54) **VORRICHTUNG UND VERFAHREN ZUM FLÜSSIGKEITSDICHTEN VERSIEGELN VON ZWEI SICH TEILWEISE ÜBERLAPPENDEN VERPACKUNGSTEILEN**
DEVICE AND METHOD FOR THE LIQUID-TIGHT SEALING OF TWO PARTIALLY OVERLAPPING PACKAGING PARTS
DISPOSITIF ET PROCÉDÉ DE SCELLEMENT ÉTANCHE AUX LIQUIDES DE DEUX ÉLÉMENTS D'EMBALLAGE SE CHEVAUCHANT EN PARTIE

(30) Priorität: 12.07.2013 DE 102013107429
(43) Veröffentlichungstag der Anmeldung: 18.05.2016
(73) Patentinhaber: SIG Technology AG, 8212 Neuhausen am Rheinfall (CH)
(72) Erfinder: PÖLL, Holger, 70439 Stuttgart (DE); PLÜSS, Marco, 8245 Feuerthalen (CH); RÜEGG, Martin, 8248 Uhwiesen (CH)
(74) Vertreter: Cohausz & Florack
(86) Internationale Anmeldenummer: PCT/EP2014/061653
(87) Internationale Veröffentlichungsnummer: WO 2015/003859

(56) Entgegenhaltungen:
- EP-A1- 0 247 986
- WO-A1-2010/049589
- WO-A2-2006/082473
- DE-A1- 1 906 796
- DE-A1- 4 123 487
- FR-A- 1 467 476
- US-A- 1 867 288
- US-A- 3 343 465
- US-A- 3 475 250

## Beschreibung

Die Erfindung betrifft zunächst eine Vorrichtung zum flüssigkeitsdichten Versiegeln von zwei sich teilweise überlappenden Verpackungsteilen, wobei das eine ein rohrförmiger Grundkörper, insbesondere gebildet aus einem Zuschnitt aus Karton/Kunststoff-Verbundmaterial, ist und ein weiteres Verpackungsteil den Verpackungskopf bzw. -boden bildet, aufweisend wenigstens einen Dorn und eine Matrize, wobei der Dorn wenigstens zwei Spreizelemente aufweist, die aus ihrer Arbeitsstellung zur Verringerung des Querschnittes in eine Ruhestellung aufeinander zu bewegt werden, um ein leichtes Aufschieben des rohrförmigen Grundkörpers zu gestatten, wobei die Siegelbacken in ihrer Arbeitsstellung eine geschlossene umlaufende Außenkontur bilden, die mit einer von einer Öffnung in der Matrize gebildeten Innenkontur derart korrespondiert, dass zwischen Innenkontur und Außenkontur ein schmaler Ringspalt zur Beaufschlagung einer Presskraft von innen her auf den Überlappungsbereich der Verpackungsteile verbleibt, sowie ein entsprechendes Verfahren.

Behälter aus einem Karton/Kunststoff-Verbund für, insbesondere flüssige, Lebensmittel sind seit langer Zeit in unterschiedlichsten Formen und Formaten auf dem Markt. Der Verbundaufbau kann neben der Trägerschicht aus Karton und einer jeweils inneren und äußeren Kunststoffschicht auch noch weitere Schichten, wie beispielsweise eine Sauerstoffsperrschicht aus Aluminium enthalten. Hinsichtlich ihrer Herstellung unterscheidet man vor allem Behälter aus Einzelzuschnitten und solche Behälter, welche aus Rollenmaterial auf sog. Schlauchformungsmaschinen hergestellt werden.

Um Behälter aus Einzelzuschnitten herzustellen, wird ein - bereits gerillter und bedruckter - Zuschnitt durch Versiegelung zweier gegenüberliegender Kanten mittels einer sog. Längsnaht zu einem sog. Verpackungsmantel, einem rohrförmigen Grundkörper, welcher dann beim Abfüller zunächst zu einem einseitig offenen Behälter verschlossen, geformt und danach sterilisiert, gefüllt und schließlich durch Verschließen der anderen Seite zu einer fertigen Packung wird.

Das Herstellen der ersten geschlossenen Seite des rohrförmigen Grundkörpers geschieht dabei in der Abfüllmaschine auf einem sog. Dornrad, auf dem eine Mehrzahl über dessen Umfang verteilt angeordnete Dorne vorhanden sind, auf welche die aufgefalteten, rohrförmigen Grundkörper aufgeschoben und an einem Ende geformt und versiegelt werden. Dabei dient der Dorn bei der Formung des Endbereichs als mechanischer Widerstand zur Aufnahme der Reaktionskräfte und beim Versiegeln, beispielsweise mittels Ultraschall, als Amboss, wobei eine Sonotrode von außen an die Verpackung herangeführt wird. Die Dorne werden durch taktweise Rotation des Dornrades nacheinander verschiedenen Bearbeitungsstationen zugeführt, wie beispielsweise aus der DE 41 42 167 A1 hervorgeht.

Die meisten auf dem Markt befindlichen Packungen werden an ihren Enden durch Faltung und Siegelung des rohrförmigen Grundkörpers selbst hergestellt. Für besondere Packungsformen kann ein Ende auch von einem vorgefertigten Formkörper als weiteres Verpackungsteil gebildet werden, der wiederum einzeln aus Kunststoff oder auch aus Fasermaterial (Pulpe) vorgefertigt sein kann. Hierdurch lassen sich beliebige geometrische Ausbildungen, insbesondere hinsichtlich der Größe und Anordnung von angeformten Öffnungs- bzw. Ausgießelementen realisieren.

Ein solcher Behälter ist aus der deutschen Patentanmeldung DE 10 2010 014 993 A1 bekannt. Hier ist der das Oberteil des Behälters bildende Formkörper so groß ausgebildet, dass sein Umfang im wesentlichem dem des rohrförmigen Grundkörpers entspricht. Dies ist jedoch nicht zwingend so, es sind auch solche Behälter bekannt, bei denen sich der Querschnitt des rohrförmigen Grundkörpers zunächst verengt, um dann an seinem verjüngten Ende mit einem Oberteil verbunden werden zu können (DE 10 2010 050 502 A1 oder DE 39 42 319 A1).

Damit beim Aufschieben auf und Abziehen vom Dorn eine Beschädigung des rohrförmigen Grundkörpers zuverlässig vermieden wird, sind auch "einfaltbare" Dorne bekannt, welche die Länge ihrer Diagonale/n durch mechanische Verstellung entsprechend ausgebildeter Eckleisten verändern können. Hierzu wird beispielsweise auf die deutsche Auslegeschrift DE 1 063 890 A verwiesen, die einen Falzdorn für Maschinen zum Herstellen von eckigen Beuteln od. dgl. beschreibt. Hierbei erfolgt die Verstellung der Eckleisten mechanisch durch Verschiebung einer Hülse in axialer Richtung im Inneren des Dornes mittels entsprechender Keilflächen für die gewünschte Verringerung des Dornquerschnittes. Der Antrieb erfolgt dabei mittels Exzenterscheiben und Rollen. Ein Kontakt zwischen Dorn und Beutel findet jedoch nur in den Eckbereichen statt.

Nachteilig ist hierbei, dass innerhalb der Dorne eines Dornrades angeordnete mechanische Antriebe für die axiale Verschiebung zur Ansteuerung der Eckleisten mit einem erheblichen konstruktiven Aufwand verbunden und darüber hinaus auch verschleißanfällig und somit wartungsintensiv sind.

Aus dem Bereich der Dosenherstellung sind Lösungen zum Einsetzen und gasdichten Verschweißen von Böden bekannt. So zeigt beispielsweise die deutsche Offenlegungsschrift DE 41 23 487 A1 neben einem ringförmigen Schweißinduktor einen radial aufweitbaren Anpressstempel. Dieser Anpressstempel besteht aus zwei drehfesten Pressringen, die in radialer Richtung verstellbar sind. Die Pressringe sind unter Bildung von Spalten in Segmente geteilt.

Die Spalten und die Segmentteilung sind aber insofern nachteilig, als dass beim Verschweißen gleichmäßige Presskräfte stets gewünscht sind. Solche Unterbrüche können neben Undichtigkeiten auch Abdrücke und Beschädigungen an der Verpackung verursachen. Außerdem geht mit der vorgeschlagenen Lösung ebenfalls ein erheblicher konstruktiver Aufwand einher.

US 3 475 250 A1 zeigt eine Lösung zum Heißsiegeln von zwei ringförmigen thermoplastischen Bauteilen. Der radial aufweitbare Anpressstempel wird in zwei Ausführungen gezeigt, welche die Bauteile von innen her anpressen und siegeln. Die Erste offenbart ein einzelnes Spreizelement in der Form einer Schraubenfeder, das beim Ansiegeln aufgeweitet wird. Die Zweite hingegen zeigt ein keilförmiges Element, welches in die Unterbrechung einer Spannscheibe eingreift und diese so aufweitet. Diese beiden Elemente bewegen sich allerdings in ihrer Ruhestellung voneinander weg und in ihrer Arbeitsstellung aufeinander zu, damit das keilförmige Element die Spannscheibe durch Druckanwendung aufweiten kann.

Aus verschiedenen Bereichen der Technik sind Vorrichtungen bekannt, welche Dorne mit Spreizelementen offenbaren, die allerdings nur teilweise schwenkbar angeordnet sind und allesamt in ihrer Arbeitsstellung keine geschlossene umlaufende Kontur bilden. Aus der Herstellung von Kartonbechern und -dosen sind zum Beispiel DE 1 906 796 A1, WO 2010 049589 A1 und US 3 343 465 A bekannt. Die Vorrichtung in WO 2006 082473 A2 stellt hingegen flexible Verpackungen her. Zur Montage von Kappen auf Stahlrohren wird in US 1 867 288 A ein Dornwerkzeug benutzt, um eine Wulst zu expandieren und eine Dichtung zwischen der Kappe und dem Stahlrohr anzubringen.

Im Bereich der Hochfrequenzverschweißung von runden Deckeln auf röhrenförmige Behälter zeigt EP 0 247 986 A1 eine Vorrichtung mit bloß einem einzelnen Spreizelement, welches sich durch axiale Bewegung in seinem zentralen Bereich am äusseren Rand expandiert, um so die Verschweißung zu ermöglichen.

Davon ausgehend liegt der Erfindung die Aufgabe zugrunde, die eingangs genannte und zuvor näher erläuterte Vorrichtung nach dem Oberbegriff von Anspruch 1, ein entsprechendes Verfahren und einen damit hergestellten Behälter so auszugestalten und weiterzubilden, dass sich der rohrförmige Grundkörper leicht auf den Dorn aufschieben bzw. von diesem abziehen lässt. Darüber hinaus ist eine einfache aber zuverlässige und verschleißarme Konstruktion erwünscht, mit der sich auch hohe Taktgeschwindigkeiten beim Betreiben der damit ausgerüsteten Verpackungsmaschinen erreichen lassen. Ferner sollen Siegelabdrücke und Dekorbeschädigungen zuverlässig vermieden werden.

Gelöst wird diese Aufgabe bei einer Vorrichtung gemäß dem Oberbegriff von Anspruch 1 dadurch, dass die Spreizelemente jeweils schwenkbar auf einem gemeinsamen Sockelelement angeordnet sind.

Erfindungsgemäß wird das Aufschieben bzw. Abziehen des rohrförmigen Grundkörpers zuverlässig erleichtert. Weiterhin können Siegelabdrücke und Dekorbeschädigungen verhindert werden.

Hinsichtlich des Verfahrens besteht die Lösung der Aufgabe in der Verwendung einer Vorrichtung gemäß Anspruch 1.

Da erfindungsgemäß die Spreizelemente eines Dorns jeweils schwenkbar auf einem gemeinsamen Sockelelement angeordnet sind, lassen sich zwei gegenüberliegende Siegelbacken in entsprechende Ausnehmungen der anderen beiden gegenüberliegenden Siegelbacken hineinbewegen, um den Gesamtquerschnitt des Dornes zu reduzieren (Ruhestellung).

Eine weitere Ausgestaltung der Erfindung sieht vor, dass mehrere Sockelelemente auf einem Dornrad befestigt sind. Sie sind dabei zunächst über den Umfang des Dornrades verteilt angeordnet und es können darüber hinaus bei entsprechend breiten Dornrädern auch mehrere parallel verlaufende Reihen von umlaufend angeordneten Dornen nebeneinander vorgesehen sein. Auf diese Weise lassen sich mit einer relativ geringen Baugröße große Durchsätze bei der Herstellung bzw. Befüllung von Packungen erzielen. Die Sockelelemente können auch vom Dornrad selbst gebildet werden.

Nach einer weiteren Lehre der Erfindung ist vorgesehen, dass jedes Spreizelement an einem Führungselement befestigt ist, welches ein exaktes Verschwenken, und zwar ausschließlich in eine festgelegte Richtung erlaubt. Auf diese Weise lassen sich bei beispielsweise annähernd quadratischem Querschnitt exakte Richtungsvektoren bestimmen, welche 45° in die "Ecken" weisen und somit auch dort eine feste Versiegelung ermöglichen. Durch die exakte Richtungsführung lässt sich auch der Verschleiß der aneinander vorbei gleitenden Flächen minimieren.

Eine zweckmäßige Weiterbildung der Erfindung sieht vor, dass die Spreizelemente wenigstens im Bereich ihrer Siegelbacken als Magnetanker ausgeführt sind. Wenn dann zusätzlich die Matrize um ihre Öffnung eine oder mehrere Magnetspule/n aufweist, lässt sich eine besonders elegante und klein bauende Antriebslösung realisieren. Bevorzugt entspricht die axiale Höhe der Magnetanker der Höhe der Magnetspule/n.

Eine andere Ausgestaltung der Erfindung sieht vor, dass die Matrize über ihren Umfang der Öffnung einstückig ausgebildet ist. Auf diese Weise kann die Öffnung in der Matrize den Dorn aufnehmen und es sind keine weiteren Antriebe oder Abstützelemente notwendig, um die Reaktionskräfte beim eigentlichen Versiegeln aufnehmen zu können.

Nach einer weiteren Lehre der Erfindung kann die Matrize auch Elemente zum Eintrag der Fügewärme aufweisen. Im Falle des Fügens mittels Ultraschallschweißen können diese Elemente zum Fügen wenigstens eine Ultraschallsonotrode innerhalb der Matrize umfassen, wobei die Siegelbacken dabei als Amboss dienen. Alternativ ist es auch möglich, dass als Elemente zum Eintrag der Fügewärme Heißluftöffnungen innerhalb der Matrize und/oder innerhalb der Siegelbacken vorgesehen sind, falls der Eintrag der Fügewärme mittels Heißluftbeaufschlagung erfolgen soll.

In einer weiteren Ausgestaltung der Erfindung erfolgt das Zuführen des weiteren Verpackungsteils gleichzeitig mit dem Zuführen der Matrize, indem die Öffnung der Matrize zum Festhalten des weiteren Verpackungsteils ausgebildet ist. In diesem Fall kann dann zweckmäßiger Weise auch das Entfernen der Matrize und das Abziehen der Einheit aus Grundkörper und weiterem Verpackungsteil gleichzeitig erfolgen, wodurch sich die Anzahl der notwendigen Bearbeitungsschritte deutlich reduzieren lässt.

In einer weiteren Ausgestaltung der Erfindung erfolgt das Auffalten bzw. Einfalten der Spreizelemente in genau festgelegte Richtungen. Auf diese Weise lässt sich ein optimales Aufbringen einer ausreichenden Presskraft beim Fügevorgang, insbesondere in den "Eckbereichen" realisieren.

Das Fügen selbst kann nach einer weiteren Lehre der Erfindung dann mittels Ultraschall oder mittels Heißluft in Verbindung mit dem bereits beschriebenen Pressvorgang erfolgen.

Beim erfindungsgemäßen Verfahren kann dabei entweder das Auffalten der Spreizelemente magnetisch und das Einfalten mit Federkraft erfolgen, oder aber, alternativ, kann auch das Auffalten der Spreizelemente mit Federkraft und das Einfalten magnetisch erfolgen. Eine dritte Möglichkeit besteht nach einer weiteren Ausgestaltung der Erfindung darin, dass die Umkehr der Faltbewegung durch magnetisches Umpolen erfolgt. Die Festlegung der jeweiligen Antriebssituation ist von verschiedenen Faktoren wie beispielsweise der Kraftverteilung, Energieausnutzung, Baugröße, insbesondere bei kleineren Packungsformaten, etc. abhängig.

Die Erfindung wird nachfolgend anhand einer lediglich ein bevorzugtes Ausführungsbeispiel darstellenden Zeichnung näher erläutert. In der Zeichnung zeigen
- Fig. 1: eine perspektivische Ansicht eines Dorns in einer diagonal geschnittenen Matrize einer erfindungsgemäßen Vorrichtung mit Spreizelementen in Ruhestellung,
- Fig. 2: eine perspektivische Ansicht des Dorns in der Matrize aus Fig. 1 mit Spreizelementen in Arbeitsstellung,
- Fig. 3: eine Draufsicht auf den Dorn in der Matrize mit Spreizelementen in Ruhestellung gem. Fig. 1 und
- Fig. 4: einen erfindungsgemäß versiegelten Behälter im Vertikalschnitt.

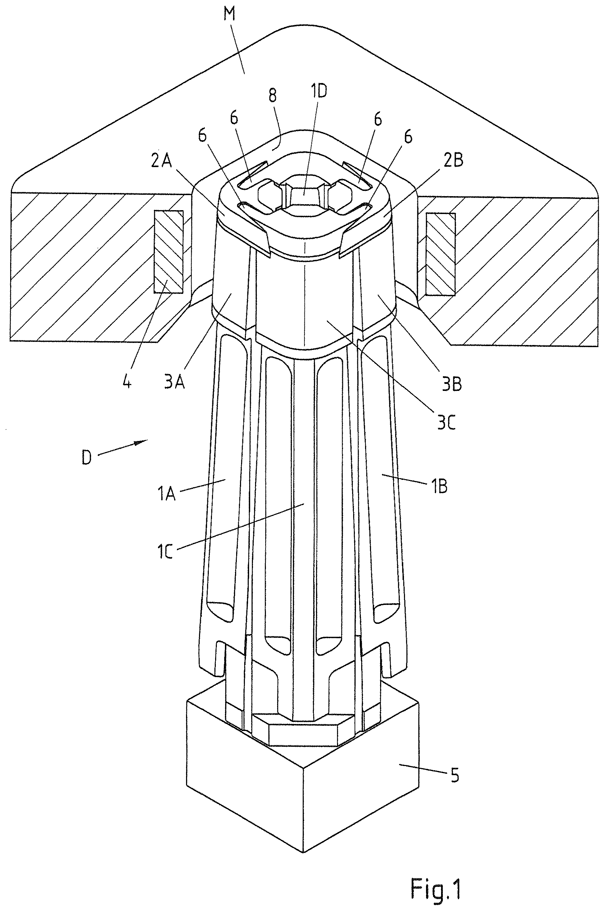

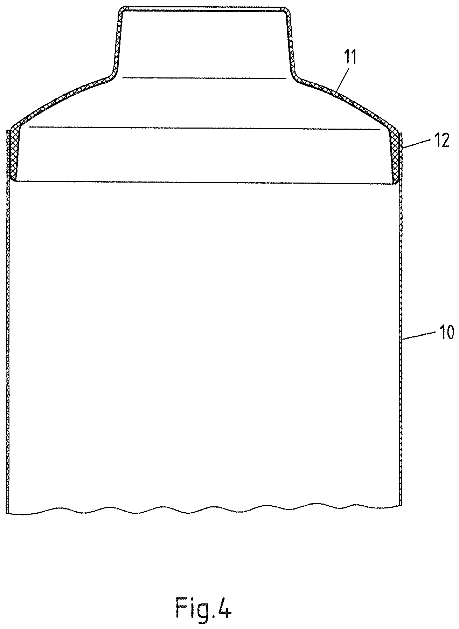

Fig. 1 zeigt zunächst und im Wesentlichen einen Dorn D einer erfindungsgemäßen Vorrichtung zum flüssigkeitsdichten Versiegeln eines rohrförmigen Grundkörpers 10 mit einem weiteren Verpackungsteil (in Fig. 4 als Packungskopf 11 dargestellt). Der Dorn D weist im dargestellten und insofern bevorzugten Ausführungsbeispiel vier Spreizelemente 1A, 1B, 1C und 1D auf, welche an ihrem unteren Ende schwenkbar an einem Sockelelement 5 verbunden sind. Das Sockelelement 5 ist dabei - in der Regel mit weiteren Sockelelementen - fest auf einem (nicht dargestellten) Dornrad angeordnet.

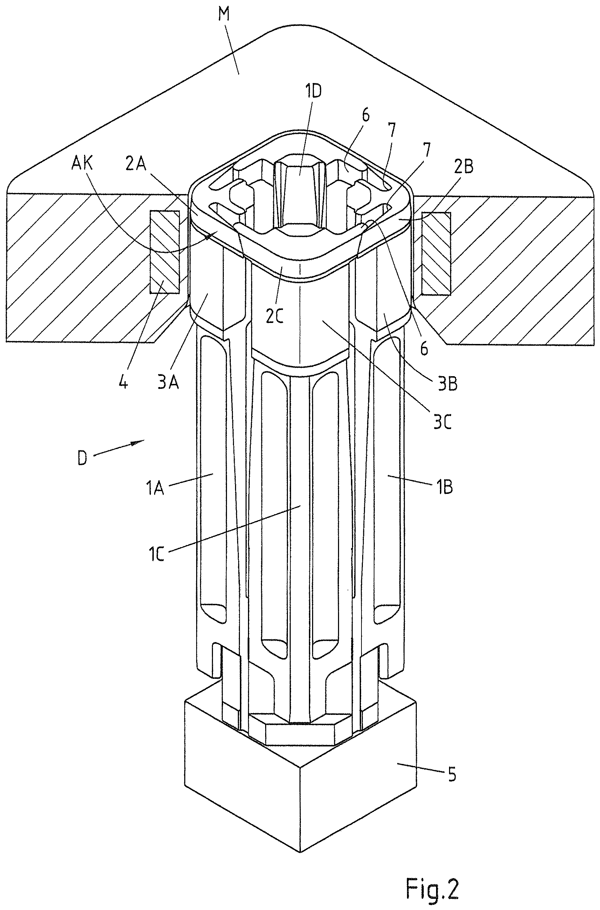

Die Verbindung der vier Spreizelemente 1A, 1B, 1C und 1D zum Sockelelement erfolgt dabei bevorzugt über jeweils ein Führungselement, welches ein exaktes Verschwenken in genau festgelegte Richtungen erlaubt. Auf diese Weise können sich die vier Spreizelemente 1A, 1B, 1C und 1D exakt in Richtung der "Ecken" der Öffnung 8 einer um den Dorn D angeordneten Matrize M bewegen, um aus ihrer Ruhestellung in ihre Arbeitsstellung zu gelangen, wie sie in Fig. 2 dargestellt ist. Dort erkennt man deutlich, dass die "ausgeklappten" Spreizelemente 1A, 1B, 1C und 1D eine geschlossene, umlaufende Außenkontur AK bilden, welche in etwa der Innenkontur IK der Öffnung 8 in der Matrize M entspricht, so dass nur ein schmaler Ringspalt verbleibt. Die Matrize M ist bevorzugt an der Unterseite ihrer Öffnung 8 mit einer nicht näher bezeichneten Fase versehen, um einen sich nach oben verjüngenden Einführabschnitt zu bilden. Die freien Enden der vier Spreizelemente 1A, 1B, 1C und 1D sind als Siegelbacken 2A, 2B, 2C und 2D ausgebildet. Unterhalb der Siegelbacken 2A, 2B, 2C und 2D sind Magnetanker 3A, 3B, 3C, 3D ausgebildet.

Die Magnetanker 3A, 3B, 3C, 3D können zum Aufspreizen des Dorns D mittels der Magnetspule 4, die bevorzugt im Inneren der Matrize M oder nahe an ihr angebracht ist, angeregt werden. Die Bauhöhe der Magnetanker 3A, 3B, 3C und 3D entspricht dabei etwa der Höhe der in der Matrize M angeordneten Magnetspule 4. Dies reduziert nicht nur die Baugröße der Spreizelemente 1A, 1B, 1C und 1D erheblich, sondern minimiert auch den Verschleiß und den Wartungsaufwand, da auf mechanische Antriebselemente vollständig verzichtet werden kann.

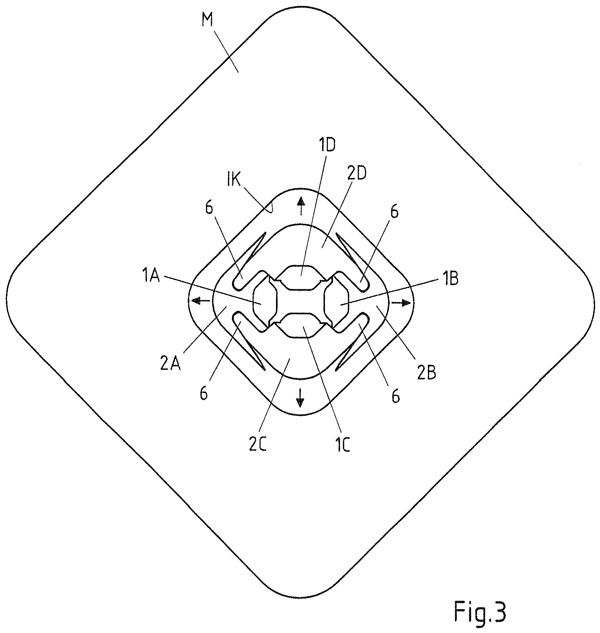

Das genaue Zusammenwirken der vier Spreizelemente 1A, 1B, 1C und 1D lässt sich am besten anhand von Fig. 3 erläutern. Dort ist in einer Draufsicht auf die Darstellung nach Fig. 1 deutlich zu erkennen, dass die beiden äußeren Spreizelemente 1A und 1B sich in Richtung der Pfeile von der dargestellten Ruhestellung in eine Arbeitsstellung bewegen lassen, wie sie in Fig. 2 gezeigt ist. Gleiches gilt für die beiden inneren Spreizelemente 1C und 1D. Die Bewegungsrichtung ist dabei durch die Wirkrichtung der Führungselemente vorgegeben, welche beispielsweise als Scharniere ausgebildet sein können.

Die Öffnungs- bzw. Schließkinematik der erfindungsgemäßen Vorrichtung ist maßgeblich durch die Form der Siegelbacken 2A, 2B, 2C und 2D bestimmt. Um eine möglichst gleichmäßige Auffalt- bzw. Einfaltbewegung zu erreichen, weisen die beiden inneren Siegelbacken 2C und 2D jeweils zwei Führungszungen 6 auf, die in entsprechende Aufnahmenuten 7 der beiden äußeren Siegelbacken 2A und 2B eingreifen und aufgrund ihrer unter einem Winkel ausgebildeten "Verzahnung" sauber aneinander entlang gleiten. Auf diese Weise kann der benötigte Energieaufwand beim Aufspreizen des Dorns D minimiert werden. Durch die schrägen Flanken der Gleitflächen entsteht ferner, wie Fig. 2 deutlich zu entnehmen, eine geschlossene umlaufende Außenkontur AK des Siegelbereiches der Siegelbacken 2A, 2B, 2C, 2D.

Fig. 4 zeigt schließlich im Vertikalschnitt einen erfindungsgemäß hergestellten Behälter, bei dem ein rohrförmiger Grundkörper 10 einen weiteren Verpackungsteil 11 in einem Überlappungsbereich 12 umschließt. Man erkennt deutlich, dass zum Fügen beider Verpackungsteile 10, 11 von innen her eine Presskraft im Bereich der überlappenden Verpackungsteile aufgebracht werden muss, welches durch die erfindungsgemäße Vorrichtung zuverlässig und elegant realisiert werden kann.

Mit der dargestellten Anordnung lässt sich beispielsweise eine Packung herstellen, wie sie aus der weiter oben näher beschriebenen DE 10 2010 014 993 A1 bekannt ist. Deren Querschnitt ist annähernd quadratisch, wobei die "Ecken" entsprechend große Radien aufweisen.

## Patentansprüche

1. Vorrichtung zum flüssigkeitsdichten Versiegeln von zwei sich teilweise überlappenden Verpackungsteilen (10, 11), wobei das eine ein rohrförmiger Grundkörper (10), insbesondere gebildet aus einem Zuschnitt aus Karton/Kunststoff-Verbundmaterial, ist und ein weiteres Verpackungsteil (11) den Verpackungskopf bzw. -boden bildet, aufweisend wenigstens einen Dorn (D) und eine Matrize (M), wobei der Dorn (D) wenigstens zwei Spreizelemente (1A, 1B, 1C, 1D) mit Siegelbacken (2A, 2B, 2C, 2D) aufweist, die aus ihrer Arbeitsstellung zur Verringerung des Querschnittes in eine Ruhestellung aufeinander zu bewegt werden, um ein leichtes Aufschieben des rohrförmigen Grundkörpers (10) zu gestatten, wobei die Siegelbacken (2A, 2B, 2C, 2D) in ihrer Arbeitsstellung eine geschlossene umlaufende Außenkontur (AK) bilden, die mit einer von einer Öffnung in der Matrize (M) gebildeten Innenkontur (IK) derart korrespondiert, dass zwischen Innenkontur (IK) und Außenkontur (AK) ein schmaler Ringspalt zur Beaufschlagung einer Presskraft von innen her auf den Überlappungsbereich (12) der Verpackungsteile (10, 11) verbleibt,
**dadurch gekennzeichnet, dass**
die Spreizelemente (1A, 1B, 1C, 1D) jeweils schwenkbar auf einem gemeinsamen Sockelelement (5) angeordnet sind.

2. Vorrichtung nach Anspruch 1,
**dadurch gekennzeichnet, dass**
mehrere Sockelelemente (5) auf einem Dornrad befestigt sind.

3. Vorrichtung nach Anspruch 2,
**dadurch gekennzeichnet, dass**
das Sockelelement (5) vom Dornrad selbst gebildet wird.

4. Vorrichtung nach einem der Ansprüche 1 bis 3,
**dadurch gekennzeichnet, dass**
jedes Spreizelement (1A, 1B, 1C, 1D) an einem Führungselement befestigt ist, welches ein exaktes Verschwenken in eine festgelegte Richtung erlaubt.

5. Vorrichtung nach einem der Ansprüche 1 bis 4,
**dadurch gekennzeichnet, dass**
die Spreizelemente (1A, 1B, 1C, 1D) wenigstens im Bereich ihrer Siegelbacken (2A, 2B, 2C, 2D) als Magnetanker (3A, 3B, 3C, 3D) ausgeführt sind.

6. Vorrichtung nach einem der Ansprüche 1 bis 5,
**dadurch gekennzeichnet, dass**
die Matrize (M) über ihren Umfang der Öffnung (8) einstückig ausgebildet ist.

7. Vorrichtung nach einem der Ansprüche 1 bis 6,
**dadurch gekennzeichnet, dass**
die Matrize (M) eine oder mehrere Magnetspule/n (4) aufweist.

8. Vorrichtung nach einem der Ansprüche 1 bis 7,
**dadurch gekennzeichnet, dass**
die Matrize (M) Elemente zum Eintrag der Fügewärme aufweist.

9. Vorrichtung nach Anspruch 8,
**dadurch gekennzeichnet, dass**
als Element zum Eintrag der Fügewärme wenigstens eine Ultraschallsonotrode im Bereich der Matrize vorgesehen ist und dass die Siegelbacken dabei als Amboss dienen.

10. Vorrichtung nach Anspruch 8,
**dadurch gekennzeichnet, dass**
als Elemente zum Eintrag der Fügewärme Heißluftöffnungen innerhalb der Matrize und/oder innerhalb der Siegelbacken vorgesehen sind.

11. Verfahren zum flüssigkeitsdichten Versiegeln von zwei sich teilweise überlappenden Verpackungsteilen (10, 11), wobei das eine ein rohrförmiger Grundkörper (10), insbesondere gebildet aus einem Zuschnitt aus Karton/Kunststoff-Verbundmaterial, ist und ein weiteres Verpackungsteil (11) den Verpackungskopf bzw. -boden bildet, mittels einer Vorrichtung nach einem der Ansprüche 1 bis 10, mit den folgenden Schritten:
- Zuführen eines aufgefalteten rohrförmigen Grundkörpers ,
- Aufschieben des Grundkörpers auf einen Spreizelemente aufweisenden Dorn,
- Zuführen einer eine Öffnung aufweisenden Matrize,
- Zuführen eines weiteren Verpackungsteils auf den Dorn,
- Eintrag der Fügewärme,
- Verpressen von Grundkörper und weiterem Verpackungsteil gegen die Matrize durch Auffalten der Spreizelemente zur Bildung einer umlaufenden Außenkontur im Kontaktbereich der Siegelbacken,
- Fügen von Grundkörper und weiterem Verpackungsteil,
- Einfalten der Spreizelemente,
- Entfernen der Matrize und
- Abziehen der Einheit aus Grundkörper und weiterem Verpackungsteil.

12. Verfahren nach Anspruch 11,
**dadurch gekennzeichnet, dass**
das Zuführen des weiteren Verpackungsteils gleichzeitig mit dem Zuführen der Matrize erfolgt, indem die Öffnung der Matrize zum Festhalten des weiteren Verpackungsteils ausgebildet ist.

13. Verfahren nach Anspruch 11 oder 12,
**dadurch gekennzeichnet, dass**
das Auffalten bzw. Einfalten der Spreizelemente in genau festgelegte Richtungen erfolgt.

14. Verfahren nach einem der Ansprüche 11 bis 13,
**dadurch gekennzeichnet, dass**
der Eintrag der Fügewärme mittels Ultraschall erfolgt.

15. Verfahren nach einem der Ansprüche 11 bis 13,
**dadurch gekennzeichnet, dass**
der Eintrag der Fügewärme mittels Heißluft erfolgt.

16. Verfahren nach einem der Ansprüche 11 bis 15,
**dadurch gekennzeichnet, dass**
das Auffalten der Spreizelemente magnetisch und das Einfalten mit Federkraft erfolgt.

17. Verfahren nach einem der Ansprüche 11 bis 15,
**dadurch gekennzeichnet, dass**
das Auffalten der Spreizelemente mit Federkraft und das Einfalten magnetisch erfolgt.

18. Verfahren nach einem der Ansprüche 11 bis 15,
**dadurch gekennzeichnet, dass**
die Umkehr der Faltbewegung durch magnetisches Umpolen erfolgt

## Claims

1. Device for fluid-tight sealing of two packaging parts (10, 11) partially overlapping one another, wherein one packaging part is a tubular base body (10), in particular formed from a cut-out of cardboard/plastic composite material and a further packaging part (11) forms the packaging head or base, comprising at least one mandrel (D) and a die (M), wherein the mandrel (D) has at least two expansion elements (1A, 1B, 1C, 1D) with sealing jaws (2A, 2B, 2C, 2D) which are moved towards one another from their working position to reduce the cross-section into a rest position in order to allow a slight pushing of the tubular base body (10), wherein the sealing jaws (2A, 2B, 2C, 2D) form a closed circumferential outer contour (AK) in their working position, which corresponds to an inner contour (IK) formed by an opening in the die (M) such that a narrow annular gap remains between inner contour (IK) and outer contour (AK) to apply a pressing force from the interior to the overlapping region (12) of the packaging parts (10,11), **characterised in that** the expansion elements (1A, 1B, 1C, 1D) are arranged in each case pivotable on a common base element (5).

2. Device according to claim 1, **characterised in that** a plurality of base elements (5) are fastened on a mandrel wheel.

3. Device according to claim 2, **characterised in that** the base element (5) is formed by the mandrel wheel itself.

4. Device according to any one of claims 1 to 3, **characterised in that** each expansion element (1A, 1B, 1C, 1D) is fastened on a guide element, which allows a precise pivoting into a specified direction.

5. Device according to any one of claims 1 to 4, **characterised in that** the expansion elements (1A, 1B, 1C, 1D) are configured as magnetic anchors (3A, 3B, 3C, 3D) at least in the region of their sealing jaws (2A, 2B, 2C, 2D).

6. Device according to any one of claims 1 to 5, **characterised in that** the die (M) is formed in one piece over its circumference of the opening (8).

7. Device according to any one of claims 1 to 6, **characterised in that** the die (M) has one or a plurality of magnetic coil(s) (4).

8. Device according to any one of claims 1 to 7, **characterised in that** the die (M) has elements for the entry of joining heat.

9. Device according to claim 8, **characterised in that** at least one ultrasonic sonotrode is provided in the region of the die as the element for the entry of the joining heat and **in that** the sealing jaws serve as an anvil here.

10. Device according to claim 8, **characterised in that** hot air openings are provided inside the die and/or inside the sealing jaws as the elements for the entry of joining heat.

11. Method for the fluid-tight sealing of two packaging parts (10, 11) partially overlapping one another, wherein one packaging part is a tubular base body (10), in particular formed from a cut-out of cardboard/plastic composite material and a further packaging part (11) forms the packaging head or base, by means of a device according to any one of claims 1 to 10, with the following steps:
- supplying an unfolded tubular base body,
- pushing the base body on a mandrel comprising expansion elements,
- supplying a die comprising an opening,
- supplying a further packaging part on the mandrel,
- entry of joining heat,
- pressing base body and further packaging part against the die by unfolding the expansion elements to form a circumferential outer contour in the contact region of the sealing jaws,
- joining base body and further packaging part,
- folding in the expansion elements,
- removing the die and
- pulling out the unit of base body and further packaging part.

12. Method according to claim 11, **characterised in that** the supply of the further packaging part takes place at the same time as the supply of the die by the opening of the die being formed to hold the further packaging part.

13. Method according to claim 11 or 12, **characterised in that** the unfolding or folding-in of the expansion elements takes place in precisely specified directions.

14. Method according to any one of claims 11 to 13, **characterised in that** the entry of the joining heat takes place by means of ultrasound.

15. Method according to any one of claims 11 to 13, **characterised in that** the entry of the joining heat takes place by means of hot air.

16. Method according to any one of claims 11 to 15, **characterised in that** the unfolding of the expansions elements takes place magnetically and the folding-in takes place with spring force.

17. Method according to any one of claims 11 to 15, **characterised in that** the unfolding of the expansion elements takes place with spring force and the folding-in takes place magnetically.

18. Method according to any one of claims 11 to 15, **characterised in that** the reverse of the folding movement takes place by magnetic polarity reversal.

## Revendications

1. Dispositif servant au scellement, étanche aux liquides, de deux parties d'emballage (10, 11) se chevauchant en partie, où l'une des parties d'emballage est un corps de base (10) de forme tubulaire, ledit corps de base étant formé en particulier à partir d'une découpe réalisée dans un matériau composite à base de carton / de matière plastique, et une autre partie d'emballage (11) forme la tête ou le fond de l'emballage, ledit dispositif présentant au moins un mandrin (D) et une matrice (M), où le mandrin (D) présente au moins deux éléments d'écartement (1A, 1B, 1C, 1D) comportant des mâchoires de scellement (2A, 2B, 2C, 2D) qui, pour la diminution de la section, sont déplacées les unes vers les autres en passant de leur position de travail à une position de repos, pour permettre un léger coulissement du corps de base (10) de forme tubulaire, où les mâchoires de scellement (2A, 2B, 2C, 2D) forment, dans leur position de travail, un contour extérieur périphérique fermé (AK) qui correspond à un contour intérieur (IK) formé par une ouverture située dans la matrice (M), de manière telle qu'il subsiste, entre le contour intérieur (IK) et le contour extérieur (AK), une fente annulaire étroite servant à la fourniture d'une force de compression s'exerçant, de l'intérieur, sur la zone de chevauchement (12) des parties d'emballage (10, 11),
**caractérisé**
**en ce que** les éléments d'écartement (1A, 1B, 1C, 1D) sont disposés en pouvant pivoter à chaque fois sur un élément de socle commun (5).

2. Dispositif selon la revendication 1,
**caractérisé**
**en ce que** plusieurs éléments de socle (5) sont fixés sur une roue à mandrins.

3. Dispositif selon la revendication 2,
**caractérisé**
**en ce que** l'élément de socle (5) est formé par la roue à mandrins elle-même.

4. Dispositif selon l'une quelconque des revendications 1 à 3,
**caractérisé**
**en ce que** chaque élément d'écartement (1A, 1B, 1C, 1D) est fixé sur un élément de guidage qui permet un pivotement exact dans une direction fixée.

5. Dispositif selon l'une quelconque des revendications 1 à 4,
**caractérisé**
**en ce que** les éléments d'écartement (1A, 1B, 1C, 1D) sont réalisés, au moins dans la zone de leurs mâchoires de scellement (2A, 2B, 2C, 2D), comme des armatures magnétiques (3A, 3B, 3C, 3D).

6. Dispositif selon l'une quelconque des revendications 1 à 5,
**caractérisé**
**en ce que** la matrice (M), sur sa périphérie de l'ouverture (8), est configurée en étant d'un seul tenant.

7. Dispositif selon l'une quelconque des revendications 1 à 6,
**caractérisé**
**en ce que** la matrice (M) présente une ou plusieurs bobine(s) magnétique(s) (4).

8. Dispositif selon l'une quelconque des revendications 1 à 7,
**caractérisé**
**en ce que** la matrice (M) présente des éléments servant à l'entrée de la chaleur d'assemblage.

9. Dispositif selon la revendication 8,
**caractérisé**
**en ce qu'**il est prévu dans la zone de la matrice, comme élément servant à l'entrée de la chaleur d'assemblage, au moins une sonotrode à ultrasons, et **en ce que** les mâchoires de scellement servent ici d'enclume.

10. Dispositif selon la revendication 8,
**caractérisé**
**en ce qu'**il est prévu, comme éléments servant à l'entrée de la chaleur d'assemblage, des ouvertures d'air très chaud situées à l'intérieur de la matrice et/ou situées à l'intérieur des mâchoires de scellement.

11. Procédé servant au scellement, étanche aux liquides, de deux parties d'emballage (10, 11) se chevauchant en partie, où l'une des parties d'emballage est un corps de base (10) de forme tubulaire, ledit corps de base étant formé en particulier à partir d'une découpe réalisée dans un matériau composite à base de carton / de matière plastique, et une autre partie d'emballage (11) forme la tête ou le fond de l'emballage, ledit procédé mis en oeuvre au moyen d'un dispositif selon l'une quelconque des revendications 1 à 10 comprend les étapes suivantes :
- la fourniture d'un corps de base déployé, de forme tubulaire,
- le coulissement du corps de base sur un mandrin présentant des éléments d'écartement,
- la fourniture d'une matrice présentant une ouverture,
- la fourniture, sur le mandrin, d'une autre partie d'emballage,
- l'entrée de la chaleur d'assemblage,
- la compression du corps de base et de l'autre partie d'emballage contre la matrice, par déploiement des éléments d'écartement servant à la formation d'un contour extérieur périphérique situé dans la zone de contact des mâchoires de scellement,
- l'assemblage du corps de base et de l'autre partie d'emballage,
- le repli des éléments d'écartement,
- la suppression de la matrice et
- l'extraction de l'ensemble se composant du corps de base et de l'autre partie d'emballage.

12. Procédé selon la revendication 11,
**caractérisé**
**en ce que** la fourniture de l'autre partie d'emballage se produit en même temps que la fourniture de la matrice, tandis que l'ouverture de la matrice est configurée pour servir à la fixation de l'autre partie d'emballage.

13. Procédé selon la revendication 11 ou 12,
**caractérisé**
**en ce que** le déploiement ou le repli des éléments d'écartement se produit dans des directions fixées de manière précise.

14. Procédé selon l'une quelconque des revendications 11 à 13,
**caractérisé**
**en ce que** l'entrée de la chaleur d'assemblage se produit au moyen d'ultrasons.

15. Procédé selon l'une quelconque des revendications 11 à 13,
**caractérisé**
**en ce que** l'entrée de la chaleur d'assemblage se produit au moyen d'air très chaud.

16. Procédé selon l'une quelconque des revendications 11 à 15,
**caractérisé**
**en ce que** le déploiement des éléments d'écartement se produit magnétiquement, et le repli se produit avec de l'élasticité.

17. Procédé selon l'une quelconque des revendications 11 à 15,
**caractérisé**
**en ce que** le déploiement des éléments d'écartement se produit avec de l'élasticité, et le repli se produit magnétiquement.

18. Procédé selon l'une quelconque des revendications 11 à 15,
**caractérisé**
**en ce que** l'inversion du mouvement de pliage se produit par inversion de la polarité magnétique.
